# EUROPEAN PATENT APPLICATION

(11) **EP 1 170 900 A2**
(43) Date of publication of application: **09.01.2002**
(21) Application number: 01114385.6
(22) Date of filing: 13.06.2001
(51) Int. Cl.: H04L 12/24

(54) **Network apparatus and network administration method**

(30) Priority: 15.06.2000 JP 2000180482
(71) Applicant: Murata Kikai Kabushiki Kaisha, Minami-ku, Kyoto-shi, Kyoto (JP)
(72) Inventor: Hiraoka, Toru, Nagaokakyo-shi, Kyoto (JP)
(74) Representative: Alber, Norbert, Dipl.-Ing.

(57) **Abstract**

A network facsimile machine (1) managed by a management machine (2) using SNMP (Simple Network Management Protocol). The network facsimile machine is connected to the management machine over LAN (3). The network facsimile machine (1) has a copy function and a scan function. The network facsimile machine includes RAM (12) for storing information to be managed by the management machine (2). CPU (10) determines whether or not the information stored in RAM should be sent to the management machine on the basis of a level or seriousness of the information stored. The network facsimile machine (1) sends the information to the management machine (2) when CPU (10) determines that the information should be sent to the management machine (Fig.1).

## Description

This application claims priority of Japanese Patent Application No. 2000-180482 filed in JPO on June 15, 2000, the entire disclosure of which is incorporated herein by reference.

The present invention relates to an image processing apparatus such as a so-called network apparatus (e.g., a photocopier, a scanner device, a facsimile machine and a hybrid machine having a photocopy function, a scanner function and/or a facsimile function) that can communicate over a network such as LAN, and more particularly to a network apparatus remote administered by an administration apparatus on LAN using SNMP (Simple Network Management Protocol). The present invention also relates to a network administration method suited for such a network apparatus.

In recent years, diverse office automation machines and equipments connectable to LAN are developed and practiced. As these machines and equipments spread, a network administrator of LAN often remote controls the machines and equipments using its own computer (administration machine).

For example, the office automation machine is given an email function such that it informs the administration machine of occurrence of an error in the office automation machine by email. This allows use of TCP/IP (Transmission Control Protocol/Internet Protocol), which has now become a standard for LAN as the internet/intranet environments are built up. Thus, an existing technology can be used to relatively easily inform the administration machine of the error.

In the conventional network administration method, however, special computer programs are required to give the email function to both the office automation machine and the administration machine. This makes the whole system complicated.

LAN taking advantage of TCP/IP can utilize SNMP, which is an upper layer protocol of TCP/IP. SNMP is defined as a management protocol for the TCP/IP network environment in RFC1157. It is developed primarily for collecting information about network environments using TCP/IP or a network relay device, such as a router, a bridge, repeater, etc.

Individual administration information is referred to as an object in SNMP, and an aggregation of these objects is referred to as MIB (Management Information Base) information or simply MIB, which are stored upon occurrence of an event in a machine to be administered. For example, administration information collection by the administration device is performed as follows: the administration machine sends a "Get Request" command, which is defined by SNMP, to the machine to be administered, and the machine to be administered sends back corresponding administration information together with the "Get Request" command in response to the "Get Request". The administration information is also automatically sent to the administration device upon a "Trap" command when an event occurs in the administered machine.

MIB (standard MIB or MIB-2) used in SNMP is, however, limitative so that it is not adapted in collecting the administration information such as machine information and condition information of the image processing apparatus (e.g., a photocopier, a scanner device, a printer device, a facsimile machine, or a their hybrid machine) connected to LAN.

MIB includes extended MIB. In general, the extended MIB is only used for managing invariant information such as network machine manufacturer information and machine specifications.

An object of the present invention is to provide an image processing apparatus that can solve the above described problems of the conventional arrangement.

According to one embodiment of the present invention, there is provided a network apparatus managed by a management machine using SNMP comprising storage means for storing information to be managed by a management machine, determination means for determining whether or not the information stored in the storage means should be sent to the management machine on the basis of the information stored in the storage means, and transmission means for sending the information to the management machine when the determination means determines that the information should be sent to the management machine. This network apparatus only requires the SNMP usable network environment. Thus, the network management is accomplished with a very simple structure.

Various events that can possibly occur in the network apparatus may be allotted grades or levels. When a low grade event occurs, the determination means may determine that the information should not be sent to the management machine. For instance, if the network apparatus is a facsimile machine and a minor trouble or error occurs such as paper shortage, paper jamming and unlocked paper cassette, an operator can deal with the trouble by himself or herself so that the information about this event will not be transferred to the management machine. When a high grade event (i.e., a serious trouble or error) occurs, on the other hand, such as toner shortage and drum damage, the determination means may determine that the information should be transferred to the management machine since the operator cannot fix it; the operator needs a serviceman. Preferably a "Trap" command is utilized when sending the information to the management machine. By selectively sending the event information to the management machine, unnecessary notification will not be made to the management machine.

The network apparatus may further include reception means for receiving an information transmission request from the management machine, and the transmission means may send the information to the management machine in compliance with the transmission request received by the reception means. For example, a "Get Request" command is sent to the network apparatus from the management machine, and a "Get Response" command is sent back to the management machine from the network apparatus in response to the "Get Request" together with the management information. This allows the management machine to obtain the management information when it needs the management information.

The network apparatus may have at least two of a copy function, an image scan function, an image print function and a facsimile function. Thus, the network apparatus may be a hybrid machine. The storage means may be a single hardware for storing information related to the respective functions and conditions to be managed by the management machine. This simplifies the construction of the network apparatus. The information may be MIB information.

These and other objects, aspects and advantages of the present invention will become apparent to those skilled in the art to which the present invention pertains from the subsequent detailed description and appended claims when taken in conjunction with the accompanying drawings.

Figure 1 is a block diagram showing a facsimile machine, which is an example of a network apparatus according to the present invention, and a network connected to the facsimile machine;

Figure 2 is a flowchart showing a process content executed by CPU of the facsimile machine depicted in Figure 1; and

Figure 3 illustrates events which are detected and stored in a memory of the facsimile machine.

An embodiment of the present invention will now be described in reference to the accompanying drawings.

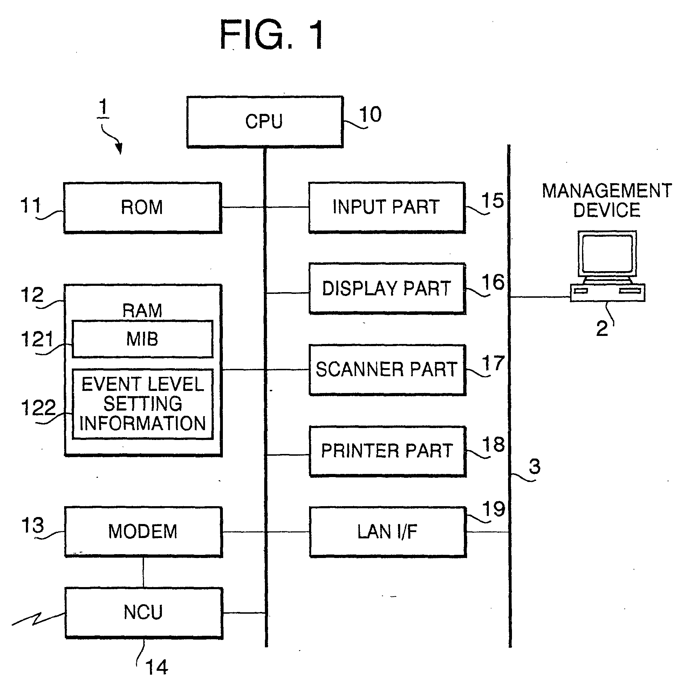

Referring to Figure 1, illustrated is a structure of a facsimile machine 1, which is an example of a network apparatus of the present invention, and a structure of a network to which the facsimile machine 1 is connected. The facsimile machine 1 is connected to LAN 3 via a LAN interface 19 (will be described) such that it can communicate using TCP/IP. An administration apparatus (management apparatus) 2 of a network administrator (manager) is connected to LAN 3 such that it administers various machines and equipments (not shown) including the facsimile machine 1 on LAN 3. The administration apparatus 2 possesses a server computer, for example. Thus, the administration apparatus 2 can administer the facsimile machine 1 using SNMP.

The facsimile machine 1 includes CPU 10, ROM 11 connected to CPU over a bus, RAM 12, a modem 13, NCU 14 (Network Control Unit), an operation unit 15 for data and command entry and registration, a display unit 16, a scanner unit 17, a printer unit 18, the LAN interface 19, etc.

CPU 10 not only controls hardware elements of the facsimile machine 1 over the bus but also executes programs stored in ROM 11.

ROM 11 stores various computer programs needed for operations of the facsimile machine 1 such as transmission of administration information (MIB121; will be described) of the facsimile machine 1 itself.

RAM 12 includes SRAM, DRAM and other elements to temporarily store data generated upon execution of the computer program(s) by CPU 10. It also serves as an image memory to store, for instance, image data to be transmitted via facsimile to a remote machine.

In the illustrated embodiment, RAM 12 further records MIB121 and event level setting information 122. MIB121 is treated as administration information in SNMP defined by RFC, and primarily represents machine information and machine condition of the facsimile machine 1. The machine information may include information about a sender, installation place, available options and a memory switch condition, and the machine condition may include "in condition/out of condition" of the line, network, image scanner and printer, the number of the pages of a scanned document or to be printed, paper size and a paper cassette in use. As a certain event occurs, the facsimile machine 1 obtains information about the event and accumulates it as a so-called object in MIB121.

The event level setting information 122 indicates an event level which is predetermined with respect to an event related to a presumable error (error event). In this embodiment, three event levels are established. The first event level corresponds to a low-grade error such as paper near end, paper shortage in a certain cassette and unlocked cassette. In case of the first event level, an operator of the facsimile machine 1 can repair the error by himself or herself without ordering new parts and/or consumable supplies of the machine. It should be noted that the first event level may also include information about facsimile data transmission and reception. The second event level represents a mid-grade error such as paper shortage in all cassettes, small toner remainder and paper jamming. The operator may be able to fix the error, but needs to order parts and/or consumable supplies. The third event level represents a major error/trouble such no toner and drum damage. Particular parts are damaged or consumed completely so that the facsimile machine 1 can no longer operate. If a replacement part such as a new toner or drum is available, the operator can repair the error. If the replacement part is not available, the operator or the machine makes a call to a serviceman or company.

The modem 13 is connected to the bus. In the illustrated embodiment, the modem 13 is a fax modem for facsimile communication. The modem 13 is also connected to NCU 14 directly. NCU 14 is connected to the bus, too. NCU 14 is a hardware that controls connection to and disconnection from an analog public telephone network (PSTN) (not shown). NCU 14 connects the modem 13 to PSTN when necessary. It should be noted that DSU (Digital Service Unit) may be provided for connection to a digital public telephone network (ISDN) of a baseband transmission scheme.

The operation unit 15 includes character keys, numeric keys, speed dial keys, one touch dial keys and function keys needed to operate the facsimile machine 1.

The display unit 16 includes a liquid crystal display or CRT display to indicate what the operator or user enters from the operation unit 15 and various messages such as an error message issued from CPU 10.

The scanner 17 employs a CCD to read an original document and produce dot image data.

The printer 18 is an electrophotographic printer to print image data stored in RAM 12 or other image.

The LAN interface 19 connects the facsimile machine 1 to one node of LAN 3.

The facsimile machine 1, which is a network apparatus according to the present invention, has the above described hardware, and serves as a network facsimile machine on LAN 3 so that the operator can utilize the facsimile machine 1 directly or indirectly over LAN 3. The illustrated facsimile machine 1 is a copy-fax hybrid machine, which has a photocopy function and a facsimile function, so that the image data scanned by the scanner 17 is stored in RAM 12 and printed from the printer 18.

It should be noted that the facsimile machine 1 may be designed to only perform one of the copy, scan, print and facsimile functions, or some of these functions.

The facsimile machine 1 stores an event (e.g., error event) occurring in itself in RAM 12 as MIB121 in accordance with a procedure defined in RFC, and sends MIB121 to the management device 2 from RAM 12 over LAN 3. An operator of the management device (network manager) 2 can therefore know the machine information and machine condition of the facsimile machine 1 by looking at contents of MIB121 transmitted from the facsimile machine 1.

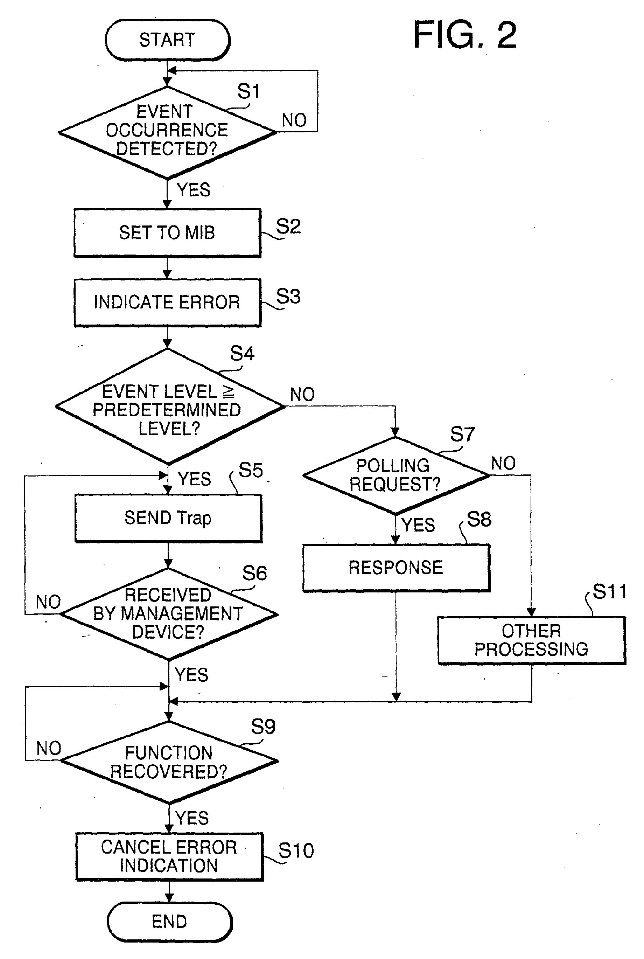

As mentioned above, the event levels are assigned to various events occurrable in the facsimile machine 1 beforehand, and relevant information is also stored in RAM 12 as the event level setting information 122. The facsimile machine 1 therefore refers to the event level setting information 122 every time a certain event happens to recognize the level of that event. The facsimile machine 1 sends MIB121 to the management machine 2 only when the event level is higher than a predetermined level. Such a function is recorded in ROM 11 beforehand as a computer program and executed by CPU 10. The flowchart for this function will now be described in detail in reference to Figure 2.

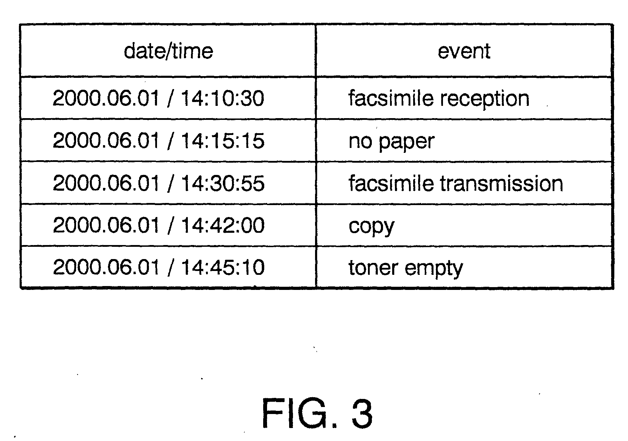

As illustrated in Figure 2, CPU 10 of the facsimile machine 1 detects occurrence of an event in the facsimile machine 1 at predetermined intervals (Step S1). If CPU 10 detects an event, it sets (stores) information related to the event into MIB121 of RAM 12 as shown in Figure 3 (Step S2).

If the detected event is an error event, CPU 10 causes the display 16 to display a content of the error (Step S3) and refers to the event level setting information 122 in RAM 12 to identify the event level. CPU 10 then determines whether the identified event level is not lower than a prescribed level (Step S4). The prescribed level is decided by the network manager or the like, and stored in RAM 12 beforehand. For example, it is the level 3_that requires a telephone call to a serviceman or company as mentioned earlier.

When the event level is equal to the level 3, CPU 10 issues a "Trap" command to the management machine 2 through the LAN interface 19 (Step S5), and waits for a predetermined response from the management machine 2 in response to the "Trap" command (Step S6). If there is no response, the program returns to Step S5 to send the "Trap" command again.

When the detected event level is lower than the level 3 at Step S4, CPU 10 then determines whether the detected event is a polling request for facsimile communication (Step S7). It should be noted, however, that the detected event is not always a polling request when the event level is lower than the level 3. The polling request is mentioned here as a typical example. Accordingly, those events defined in the event level setting information 122 which are lower the prescribed level may be called non-error events.

If the event is not the polling request at Step S7, CPU 10 executes another function when the answer at Step S7 is no, as mentioned above (Step S11). If the event is the polling request, on the other hand, CPU 10 sends back a predetermined reply to a requesting party (Step S8). CPU 10 then transmits the image data to a specified recipient.

If CPU 10 receives the predetermined reply from the management machine 2 in response to the "Trap" command at Step S6 or after CPU 10 responds to the polling request at Step S8, it determines at Step S9 whether the detected event is an error event and the function related to this error is repaired (Step S9). If the function is not recovered yet, CPU 10 repeats Step S9 at predetermined intervals.

When the function recovery is confirmed at Step S9, CPU 10 deletes the error indication displayed.in the screen 16 which is prepared at Step S3 (Step S10), and this procedure is finished.

## Claims

1. A network apparatus managed by a management machine using SNMP (Simple Network Management Protocol) comprising:
storage means for storing information to be managed by a management machine;
determination means for determining whether or not the information stored in the storage means should be sent to the management machine on the basis of the information stored in the storage means; and
transmission means for sending the information to the management machine when the determination means determines that the information should be sent to the management machine.

2. The network apparatus according to claim 1, **characterized in that** the network apparatus further includes reception means for receiving an information transmission request from the management machine such that the transmission means sends the information to the management machine in compliance with the transmission request received by the reception means.

3. The network apparatus according to claim 1 or 2, **characterized in that** the network apparatus has at least two of a copy function, an image scan function, an image print function and a facsimile function, and the storage means is a single hardware for storing information related to the respective functions to be managed by the management machine.

4. The network apparatus according to claim 1, 2 or 3, **characterized in that** the information stored in the storage means is MIB (Management Information Base) information.

5. The network apparatus according to any one of claims 1 to 4, **characterized in that** the network apparatus is a copy-facsimile machine and the information stored in the storage means relates to machine conditions of the copy-facsimile machine.

6. The network apparatus according to claim 5, **characterized in that** the determination means determines that the information should be sent to the management machine when a particular part in the copy-facsimile machine should be replaced with a new one.

7. The network apparatus according to claim 5, **characterized in that** the determination means determines that the information should not be sent to the management machine when a user is able to repair a trouble in the copy-facsimile machine.

8. The network apparatus according to claim 5, **characterized in that** the determination means determines that the information should be sent to the management machine when a serious event occurs in the copy-facsimile machine.

9. A network management method for use with a network apparatus managed by a management machine using SNMP, comprising the steps of:
A) storing information to be managed;
B) determining whether or not the stored information should be sent to a management machine on the basis of the stored information; and
C) sending the information to the management machine when the step B determines that the information should be sent to the management machine.

10. The network management method according to claim 9, **characterized in that** the network management method further includes the step D) of receiving an information transmission request from the management machine, and the step C sends the information to the management machine in compliance with the transmission request received at the step D.

11. The network management method according to claim 9 or 10, **characterized in that** the information is MIB information.

12. The network management method according to claim 9, 10 or 11, **characterized in that** the network apparatus is a copy-facsimile machine and the stored information is machine conditions of the copy-facsimile machine.

13. The network management method according to claim 12, **characterized in that** the step B determines that the information should be sent to the management machine when a particular part in the copy-facsimile machine should be replaced with a new one.

14. The network management method according to claim 12, **characterized in that** the step B determines that the information should not be sent to the management machine when a user is able to repair a trouble in the copy-facsimile machine.

15. The network management method according to claim 12, **characterized in that** the step B determines that the information should be sent to the management machine when a serious event occurs in the copy-facsimile machine.

16. A computer-readable medium for recording a program to be executed by a computer managed by a management machine using SNMP comprising:
first program code means for causing a computer to store information to be managed;
second program code means for causing the computer to determine whether or not the stored information should be sent to a management machine on the basis of the stored information; and
third program code means for causing the computer to send the information to the management machine when the computer determines that the information should be sent to the management machine.

17. The computer-readable medium according to claim 16, **characterized in that** the computer-readable medium further includes fourth program code means for causing the computer to receive an information transmission request from the management machine, and wherein the third program code means causes the computer to send the information to the management machine in compliance with the received transmission request.

18. The computer-readable medium according to claim 16 or 17, **characterized in that** the information is MIB information.

19. The computer-readable medium according to claim 16, 17 or 18, **characterized in that** the computer belongs to a network apparatus and the information to be managed is machine conditions of the network apparatus.

20. The computer-readable medium according to claim 19, **characterized in that** the computer determines that the information should be sent to the management machine when a particular part in the network apparatus should be replaced with a new one.
